# EUROPEAN PATENT SPECIFICATION

(11) **EP 2 639 997 B1**
(45) Date of publication and mention of the grant of the patent: **03.09.2014**
(21) Application number: 12159764.5
(22) Date of filing: 15.03.2012
(51) Int. Cl.: H04L 9/08

(54) **Method and system for secure access of a first computer to a second computer**
Verfahren und System für sicheren Zugriff eines ersten Computers auf einen zweiten Computer
Procédé et système pour accès sécurisé d'un premier ordinateur à un second ordinateur

(43) Date of publication of application: 18.09.2013
(73) Proprietor: ATS Group (IP Holdings) Limited, Road Town, Tortola (VG)
(72) Inventor: Wiesmaier, Alexander, 64295 Darmstadt (DE); Braun, Johannes, 64846 Gross-Zimmern (DE); Horsch, Moritz, 64283 Darmstadt (DE)
(74) Representative: Pearl Cohen Zedek Latzer Baratz UK LLP

(56) References cited:
- WO-A2-01/77788
- WO-A2-01/95545
- US-A1- 2001 055 388
- US-A1- 2003 204 734
- IVAN DAMGÃRD ET AL: "Secure Multiparty AES", 25 January 2010 (2010-01-25), FINANCIAL CRYPTOGRAPHY AND DATA SECURITY, SPRINGER BERLIN HEIDELBERG, BERLIN, HEIDELBERG, PAGE(S) 367 - 374, XP019147508, ISBN: 978-3-642-14576-6 * the whole document *
- BUNDESAMT FÜR SICHERHEIT IN DER INFORMATIONSTECHNIK: "Technical Guideline TR-03110. Advanced Security Mechanisms for Machine Readable Travel Documents Extended Access Control (EAC), Password Authenticated Connection Establishment (PACE), and Restricted Identification (RI)", INTERNET CITATION, 9 November 2009 (2009-11-09), page 107pp, XP007911385, Retrieved from the Internet: URL:https://www.bsi.bund.de/cae/servlet/co ntentblob/532066/publicationFile/45359/TR- 03110_v202_pdf.pdf [retrieved on 2010-01-29]

## Description

### Technical Field

The present invention generally relates to electronic data processing, and more particularly, relates to methods, computer program products and systems to establish secure channels between computers.

### Background

Electronic identity (eID) cards play an important role in trustworthy authentication and many countries already employ elaborated national elD cards. For example, ID cards may provide machine readable travel document functionality as specified by the International Civil Aviation Organization (ICAO) and may be equipped with an elD functionality allowing the owner to electronically prove his/her identity. Furthermore, some eID cards support an eSign functionality to generate (qualified) electronic signatures to be used in eBusiness and eGovernment applications. The eID and eSign functions are typically protected by separated personal identification numbers (PIN).

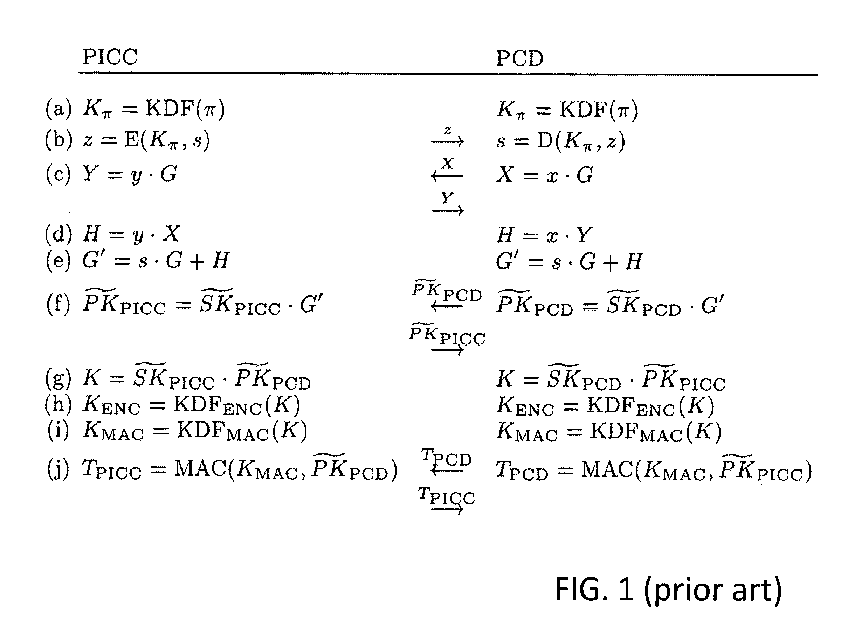

For example, the German eID card is a representative of a modern generation of eID card and provides a contactless interface according to ISO14443 to support version 2 of the Extended Access Control (EAC) protocol according to BSI-TR-03110. The EAC protocol provides a mutual authentication and may in particular be used together with the Password Authenticated Connection Establishment (PACE) protocol as shown in FIG. 1, which ensures user consent and protects the communication over the wireless channel between the eID card and the so-called terminal, which is usually the card reader or the computer system the card reader is connected to. EAC and PACE have been proven secure against active adversaries having access to the communication channels between the involved components. To use the card, a PIN is required, which is to be entered at the terminal by the user to show his/her consent in case of civil use. In case of sovereign use of the eID card, authorities can obtain access to the card by deriving a special PIN from the information printed on the card and presenting a special certificate to the card.

However, terminals are not necessarily trustworthy, especially if the terminal is a simple card reader (without key pad) connected to a computer. Entering the PIN on a compromised terminal can leak it to an adversary and allow for identity theft attacks. Attacks bypassing the security of the protocols based on compromised computers and eavesdropping on the PIN are known in the art.

For example, an eID card, also synonymously referred to as card or Proximity Integrated Circuit Card (PICC) hereinafter, may allow its cardholder to electronically prove his/her identity to service providers on the Internet. As described before, to use the card functionality a terminal is needed, which in general is a computer coupled with a card reader.

A client application which implements the required communication and cryptographic protocols as well as the user interaction needs to be installed on the computer. We synonymously refer to the terminal (including computer, card reader and client application) as Proximity Coupling Device (PCD). The terms PICC and PCD originate from BSI-TR-03110.

As a legitimate user is always the cardholder we use the term user and denote his/her PIN with π to distinguish it from other constructs, such as temporary passwords. In contrast to a common one-factor authentication by username and password, the eID functionality enables a two-factor authentication based on the ownership of the card and the knowledge of π. This enables a high level of trust between the service provider and the user which in fact is backed by a sovereign document. But it also implies a problem if such a card is used illegitimately.

Any service provider (e.g. web mail service or online shop) that uses authentication via this card needs to present a certificate to the card to proof its identity and its permission for accessing data on the eID card. For example, such certificates are emitted by trustworthy institutions which are authorized by respective authorities. However, the authentication process is usually not performed by the service providers themselves. Dedicated so-called eID servers perform it in the name of the service providers. An eID server manages certificates issued to service providers, performs the security protocols, and reads the personal data stored on the card.

The service providers only receive the data and optionally perform an authentication process based on their environment. The authentication process can be as follows:
1. The user (using the PCD) opens the website of a service provider and clicks on a link to perform the login process and the client application starts.
2. The client application establishes a Transport Layer Security (TLS) connection to the eID server and receives the service provider's certificate.
3. The certificate description (e.g. issuer, URL, terms of usage), the type of data to be read from the card and a privacy disclaimer are displayed to the user, who agrees to the data transmission by entering the PIN.
4. A secure channel is established between the PICC and the PCD by performing the PACE protocol.
5. The eID server and the card perform a mutual authentication using the EAC protocol. Hereby, the PCD serves as bridge between the channel established by PACE and the TLS connection. The certificate received in step 2 is used during the EAC protocol to prove the access rights of the el D server.
6. The personal data is read by the eID server and passed to the service provider which grants access to the user upon receipt.

Fig. 1 provides an overview of the PACE protocol steps as used in the prior art. Before it starts both parties (PICC and PCD), agree on common domain parameters D, containing elliptic curve parameters and a base point G. The numbers s, x, y, SK_{PCD} and SK_{PICC} are smaller than the order r of the elliptic curve and are chosen uniformly at random.

As depicted in step (a), both parties derive a key K_{π} from a shared password π (PI N) using a key derivation function (KDF). The KDF enables to derive one or more secret keys from a common secret value and can for example be implemented by using a SHA-1 hash computation.

In step (b) the PICC chooses a nonce s, encrypts it using the encryption function E(key, •) with the key K _{π}, and sends the resulting ciphertext z to the PCD. The PCD decrypts z to obtain the nonce s. A nonce as used hereinafter is an arbitrary number with a reasonably high probability of being used only once. In some cases very big random numbers may be used as a nonce without verification whether they had been used already before.

In steps (c) to (e), both parties use s to generate a new common base point G'. This can be achieved in various ways. The German eID card, as shown in our example, computes G' = s • G + H, where H is agreed upon by the two communication partners in an anonymous Diffie-Hellman (DH) key agreement.

As shown in steps (f) to (g) a DH key agreement based on G' is performed. Both, the PICC and the PCD respectively choose an ephemeral private key (SK_{PICC}, SK_{PCD}) and calculate a common secret point K.

Steps (h) and (i) depict the key derivation of the keys K_{ENC} for encryption and K_{MAC} for message authentication from the common secret K.

In step (j) both parties calculate an authentication token (T_{PICC}, T_{PCD}) using a MAC function and the shared key K_{MAC}.

The authentication tokens (T_{PICC}, T_{PCD}) represent a mutual key confirmation and may include a checksum of the ephemeral public keys (PK_{PICC}, PK_{PCD}). By checking the token, both parties can verify that the opponent calculated the same new base point G' and therefore knows the shared password π.

Two types of attacks will now be explained in more detail:

### 1. Identity theft attacks concerning the eID functionality

In case of a compromised PCD, the secure usage of the card cannot be guaranteed. As current attacks show, a major threat is PIN compromise. For example, an adversary can obtain the PIN by using key loggers or Trojan horses. Once holding the PIN, the attacker still needs to access the card. Aside from stealing the card, the attacker can establish a remote connection to the card via the compromised PCD, if the card holder leaves the card on the PCD or is tricked into doing so. The adversary is then able to impersonate the victim.

### 2. Man-in-the-middle (MitM) attack

A MitM attack also requires the manipulation of the client application on the PCD. An adversary controlling the PCD presents the user the correct service certificate but sends another one to the card. Therewith, the user is tricked into entering his/her PIN and authenticating at a service different from the one he/she intended to. Taking over the session by the adversary after authentication and showing an error message to the user might leave the attack undetected.

In the prior art, the only way to prevent the attacks presented above is using card readers with a secure key pad and display. Such readers are expensive and might not always be available, for example in Internet cafes or other public places.

### Summary

There is therefore a need to improve secure access from one computer to another computer in view of the above problems in the prior art.

In one aspect of the present invention a computer implemented method according to claim 1 is provided to protect the PIN of the user without requiring changes to the eID card specification. As used hereinafter, a PIN can be any alphanumeric password or any secret information or property. By adding an additional trustworthy identity provider, a common basic card reader can be used while leaving existing infrastructure components and protocols untouched.

The computer implemented method secures PIN based access from a first computer (e.g., PCD) to a second computer (e.g., PICC). PIN based access as used hereinafter refers to the use of a PIN in any sense for granting access. This does not indicate that the PIN itself needs to be used but any value derived from the PIN may be used instead. The first computer may send identifier information to at least one trusted computer. The identifier information has a portion which can include any identifier that unambiguously identifies the first computer to the at least one trusted computer.

Based on the identifier information the at least one trusted computer generates an association identifier. This association identifier is associated with a set of corresponding secret shares of a key derived from a PIN used for the PIN based access and may be a random index value. The secret shares can be generated by using a secret sharing algorithm like Shamir's Secret Sharing Scheme, secret sharing from Paillier's cryptosystem, Blakley's Secret Sharing Scheme or any other appropriate secret sharing scheme. The association identifier can then be provided to the user of the first computer through a communication means. Such communication means can be electronic communication means like a computer, telephone, radio or FAX but it can also be non-electronic communication means, such a paper based message or publication. The communication means does not need to be communicatively coupled with the first computer. In such case, the first computer does not become aware of the association identifier. In one embodiment the communication means can be a part or a component of the at least one trusted computer. The user may check that an association identifier is only used once.

The association identifier is associated with a first secret share of the key. This secret share of the key is owned by the user. By using the association of the association identifier and the first secret share of the key the user may then input the first secret share of the key via a corresponding user interface of the first computer. That is, the first computer receives finally the first secret share of the key which corresponds to the association identifier being provided to the user.

Independent from the previous steps the second computer generates a nonce value. This may occur in response to a request of the first computer. This nonce value is then encrypted by the second computer with the key derived from the PIN. Note that this key is the same key, which was split into a set of secret shares using the corresponding secret sharing algorithm. In some embodiments, the second computer may know the PIN (e.g., it may be stored in a memory portion on the respective chip card) and can therefore derive the key with a respective key derivation function. In other embodiments the key may be communicated to the second computer by another entity and the second computer memorizes the key without knowing the PIN. The result is an encrypted nonce value, which is encrypted with said key.

The encrypted nonce value is sent to the first computer. The first computer then uses the secret sharing algorithm to generate a set of further secret shares for the encrypted nonce value. This results in a first further secret share for the first computer and at least one corresponding further secret share of the encrypted nonce value for the at least one trusted computer. The first computer then sends the at least one corresponding further secret share of the encrypted nonce value to the corresponding at least one trusted computer, respectively. Now the first computer and each trusted computer each have exactly one unique corresponding secret share of the encrypted nonce value. Further, the first computer and each trusted computer each have one unique corresponding secret share of the key.

The first computer and the at least one trusted computer may now participate in a secure multiparty computation of the nonce value. That is, a secure multiparty computation protocol can be applied, where the secure computation is based on corresponding pairs of the secret shares of the key and the secret shares of the encrypted nonce value, wherein each participating computer has such a pair of the secret shares. The secure multiparty computation protocol allows computing the nonce value in a way that it remains hidden from the various participants (e.g., the first computer). That is, although, for example, the first computer has knowledge of a secret share of the key which was derived from the PIN that is needed for the secure access, the first computer knows neither the PIN nor the decrypted nonce value. The secure multiparty computation may use a secret share pair of the first computer and one secret share pair of a trusted computer for recombining the nonce value. The recombining of the nonce value may include an intermediate step where each participant in the secure multiparty computation holds a corresponding secret share of the nonce value. The first computer may then send its secret share of the nonce value to the at least one trusted computer, where it is combined with the corresponding secret share of the nonce value, which is held by the at least one trusted computer. Note that at this stage, as a result of the secure multiparty computation, the at least one trusted computer knows the nonce value. However, this occurs with explicit consent of the first computer because the first computer provides the respective secret share to the trusted server. The encrypted nonce value remains unknown for the trusted computer(s), which prevents a brute force attack on the PIN. Further, the nonce value remains hidden for the first computer. In case of using at least three parties, for example the secret share pair of the first computer and two further secret share pairs of two trusted computers, the secure multiparty computation may become perfectly secure depending on the applied secret sharing scheme.

Once the nonce value is computed, it can be proven to the second computer that the user of the first computer was actually in control of the first secret share of the key and of the encrypted nonce value, which is equivalent to knowing the PIN. Note that the PIN has never been entered anywhere. For example, this prove can use steps c to j of the standard PACE protocol with the difference that the protocol is not executed between the second and first computers but between the second computer and a trusted computer. In case the second computer is convinced that the user is in control of the required PIN, it may grant access to the first computer, accordingly. For example, the second computer can get this proof by checking the MAC value of the respective party in step (j) of the PACE protocol.

A further aspect is a computer program product which is executing the computer implemented method when being run on the first computer.

A still further aspect is a computer with an interface component and a processor component configured to run the computer implemented method.

A still further aspect is a computer system, which includes the first and second computers, a communication means and the at least one trusted computer to secure the access from the first to the second computer.

By changing the way how the first computer (e.g., PCD) executes a modified PACE protocol according to the invention, both attacks mentioned above can be prevented. A system according to the invention guarantees confidentiality of the PIN even on compromised client systems and further guarantees authenticity of the connection even on compromised client systems. This is achieved by introducing at least one trusted computer, being a trustworthy infrastructure component interacting with the first computer, and, additionally, the communication means, (e.g., a mobile phone o the user) establishing an independent channel between the trusted computer and the user of the computer system. The new method according to the invention is totally transparent (invisible, non-interfering) for the second computer (e.g., PICC). That is, already deployed and future chip cards, which are able to participate in a PACE protocol, do not need to be changed at all, which is a significant advantage as several millions of PACE cards are already deployed and are facing the above described attack risks.

Further embodiments and advantages of the invention are described by the dependent claims.

### Brief Description of the Drawings

FIG. 1 is a representation of the PACE protocol as used in the prior art;
FIG. 2 is a simplified computer system according to one embodiment of the invention;
FIG. 3 is a simplified flowchart of a computer implemented method according to one embodiment of the invention;
FIG. 4 is a detailed protocol view of the inventive protocol involving two trusted computers;
FIG. 5 illustrates secure multiparty computation according to the invention with two trusted computers; and
FIG. 6 illustrates use examples according to the invention.

### Detailed Description

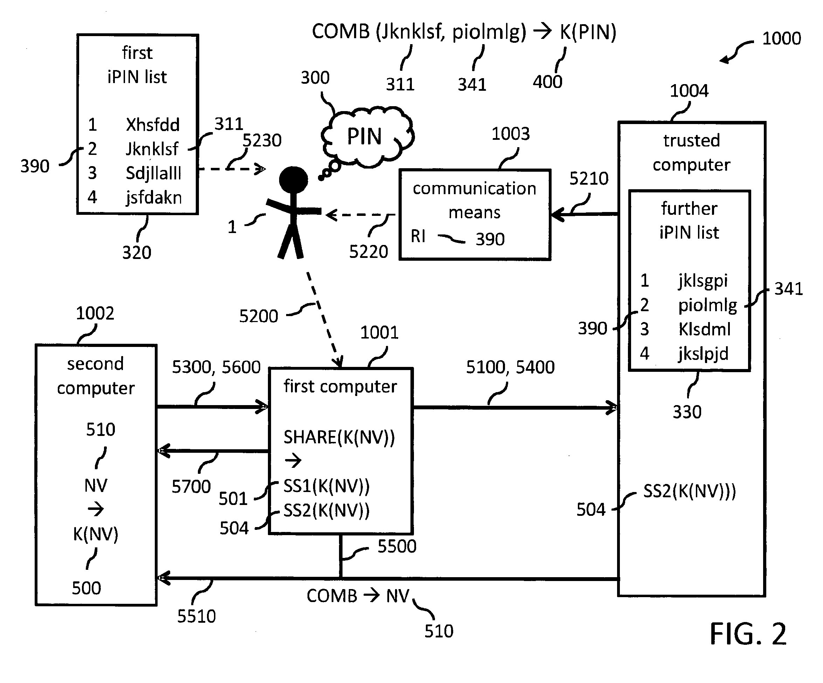

FIG. 2 is a simplified computer system 1000 according to one embodiment of the invention. The computer system 1000 is used by a user 1, for example, to get a secure connection for using a service such as online banking. The user has access to a first computer 1001 and is in control of communication means 1003. The user also knows information equivalent to a PIN 300 which allows establishing a secure communication with a second computer 1002, which is communicatively coupled to the first computer 1001.

Further, the user 1 is in control of a first iPIN list 320. An iPIN list as used hereinafter can be implemented by any indexed or indexable data structure including tables, hash tables, trees, or the like. The first iPIN list may have been created by a trusted party, which is responsible for generating secret shares of a given item using an appropriate secret sharing algorithm. The trusted entity can then distribute the secret shares to respective participants. For example, the iPIN list can be provided as a paper document to the user or it may be a virtual list which is created in a similar way as used by the SMS TAN procedure in online banking. Each iPIN in this first list 320 is a secret share (e.g., iPIN 311) of a key 400 derived from the PIN 300, which is used for the PIN based access to the second computer 1002. The first iPIN list 320 can be an electronic list stored on any appropriate storage device or it can also be a list printed on paper or any other appropriate tangible media. In order to request access to the second computer 1002, the user 1 does not make use of the PIN 300 itself. Only secret shares of the first iPIN list are entered 5200 as an input to the first computer 1001.

In one embodiment the first computer 1001 and the communication means 1003 are not communicatively coupled and therefore cannot interact with each other. In an alternative embodiment the first computer may be somehow be coupled with the communication device. However, still the first computer 1001 cannot influence the communication device in any way. That is, the coupling may not go beyond a unidirectional coupling from the communication means 1003 to the first computer 1001. The first computer 1001 is communicatively coupled with a trusted computer 1004. The coupling can be in the form of a network (wired or wireless). There can also be more than one trusted computer in which case the first computer would be coupled with all of them. Although in the example of FIG. 2 the communication means is shown as a separate device 1003, the skilled person will appreciate that it may also be implemented as a part or component of the trusted computer 1004. In such case, it may be considered as an output device of the trusted computer 1004.

At some point in time the user 1 has registered himself with the at least one trusted computer 1004. When the user starts to use the first computer 1001, he/she may identify himself/herself by entering identifier information ID1 at the first computer 1001. This identifier information is known at the at least one trusted computer from the original registration of the user. The first computer 1001 may now send 5100 identifier information ID1 to the trusted computer 1004. That is, the trusted computer then knows that the user 1 is now using the first computer 1001. For example, the first computer 1001 can be in a private location of the user but it may also be a public computer device in an internet café, at an airport or the like. In case the first computer 1001 is a personal device of the user (e.g., the user's smart phone or tablet computer) the identifier information ID1 may also be preinstalled on the device. The identifier ID1 identifies the user 1 of the first computer at the trusted computer. In case of multiple trusted computers each trusted computer may receive the same identifier or a different identifier (e.g., identifier ID1a) from the first computer for identification purposes. Further, the identifier information may have a further portion including a further identifier set which relates to the service that the user of the first computer 1001 wants to use. Such a further identifier set may be a certificate or any other type of identifier proving the identity of the service.

The trusted computer 1004 may now generate an association identifier, e.g. a random index value RI 390. Any other implementation of the association identifier, which is suitable to identify corresponding, sets of secret shares of the key, may be used instead. This random index value 390 is specifically generated for the user 1 who was identified by the trusted computer on the basis of the identifier information ID1, ID1a received from the first computer 1001. The random index may also be based on other information like the current date of time. Any random number generator may be used for this. This random index 390 is valid for identifying corresponding secret shares of the key 400 derived from the user's PIN 300. The at least one trusted computer 1004 may make sure that each possible index is used only once in the computer system 1000 for the user 1. The at least one trusted computer 1004 stores a further iPIN list 330, which includes further secret shares of the key 400. The further iPIN list 330 can be stored in a format, such as for example, a table, a text document, an extended markup language (XML) file or any other appropriate format. Each entry in the first iPIN list 320 and in the further iPIN list 330 is associated with a respective index. Corresponding indexes of the various iPIN lists related to the key 400 point to corresponding secret shares of the key 400. Only when combining corresponding secret shares of the key 400, the key can finally be derived. The generated random index 390 indicates which elements of the various iPIN lists need to be combined for that purpose. In the example, the random index 390 is associated with the iPIN 341 "piolmlg" of the further iPIN list 330 and with the iPIN 311 "Jknklsf" of the first iPIN list 320. As mentioned before, the iPINs 341 and 311 are corresponding iPINs which can be combined to provide the key 400. However, none of the iPINs on its own makes any sense. The generated random index 390 instructs the user 1, which iPIN form the first iPIN list 320 needs to be entered 5200 into the first computer 1001 for the access request. The user 1 may check that each index is used only once. The random index 390 is provided by the trusted computer 1004 to the user 1, for example, through the communication means 1003, where it is output 5220 to the user. For example, the communication means 1003 can be a cell phone of the user and the random index is displayed on the display of the cell phone, which receives 5210 the random index from the trusted computer 1004. For embodiments, where the communication means is a component of the trusted computer 1004, the receiving step 5210 may be simply an internal function call within the trusted computer 1004. Any other appropriate output like natural language output, or a printed form may be used instead with the communication means. In response to the output 5220 of the random index 390 the user 1 selects the iPIN 311 "Jknklsf" from the first iPIN list 320 and enters 5200 the iPIN into an appropriate user interface (e.g., a keyboard, a voice interface, a touch screen, etc.) of the first computer 1001. At the same time, the trusted computer 1004 knows that the corresponding iPIN of the further iPIN list 330, which associated with the trusted random index 390, is the iPIN 341 "piolmlg".

The second computer 1002 (e.g., eID card) knows the key 400 or can derive the key 400 because it may store the PIN which is required to grant access. A standard key derivation function may be used to compute the key 400 from the PIN 300 at the second computer 1002. For example, the PIN 300 can be stored in some read only memory portion of the second computer 1002. The PIN may originally have been created by the original manufacturer of the second computer 1002. In some embodiments the user 1 may be able to change the PIN later on by overwriting the original PIN value. In case the user changes the PIN 300 the corresponding secret shares of the key derived from the changed PIN need to be regenerated, which implies also a redistribution of the respective iPIN lists to the user and the trusted computers.

The second computer 1002 can generate a nonce value NV 510 (e.g., by using a standard random number generator) and encrypt the nonce value 510 using the key 400 to compute the encrypted nonce value K(NV) 500. The idea is that only somebody knowing the key 400 will be able to decrypt the nonce value 510.

When the first computer 1001 starts a user authentication to get access to the second computer 1002, the encrypted nonce value 500 is sent from the second computer 1002 to the first computer 1001. As an alternative, the second computer may send the encrypted key on its own motion to the first computer without a request.

Once the first computer 1001 receives the encrypted nonce value 500 it applies to the encrypted nonce value a secret sharing algorithm corresponding to the one, which was used to generate the secret shares of the key 400. In doing so the first computer generates a set of further secret shares 501, 504. In the example a first further secret share SS1 (K(NV)) 501 is generated for the first computer 1001 and a second secret share SS2(K(NV)) 504 is generated for the trusted computer 1004. In case of using multiple trusted computers, further corresponding secret shares of the encrypted nonce value 500 would be generated by the first computer 1001. The first computer 1001 keeps the first further secret share SS1 (K(NV)) 501 in its memory and sends 5400 the corresponding further secret share SS2(K(NV)) 504 of the encrypted nonce value 500 to the corresponding at least one trusted computer 1004. In case of multiple trusted computers the other corresponding secret shares of the encrypted nonce value are sent to the corresponding trusted computers, respectively. At the end of this phase, the first computer and each trusted computer of the system 1000 have a corresponding iPIN (secret share of the key 400) and a corresponding secret share of the encrypted nonce value 500.

The first computer and the trusted computer(s) can now participate 5500 in a secure multiparty computation protocol to compute the nonce value 510, wherein the secure computation is based on corresponding pairs (311,501), (341,504) of the secret shares 311, 341 of the key 400 and the further secret shares 501, 504 of the encrypted nonce value 500.

Perfect Secret Sharing means dividing a secret s into n secret shares, such that it is possible to reconstruct the secret if given at least k ≤ n shares. Less than k shares, however, provide absolute no information about the secret. I.e. the secret is information theoretically secure as long as an adversary only obtains less than k shares. An example for such a scheme is Shamir's Secret Sharing Scheme. It is to be noted that the system 1000 can also use non-perfect secret sharing schemes, such as Paillier's cryptosystem, where Paillier's cryptosystem is seen as a secret sharing scheme in the broader sense, although strictly speaking it is a homomorphic encryption system.

Secure Multiparty Computation (SMPC) denotes the distributed computation of a function f by n participants. Thereby, a so called non-qualified subset of t < n participants cannot learn anything about the function output besides their own inputs and outputs. SMPC can be realized based on Shamir's secret sharing scheme, where t < n/2 is required to guarantee perfect security against passive adaptive adversaries. Thus, n = 3 and t = 1 are the smallest possible parameters. Note that this means, that two participants can reconstruct the inputs and outputs without involving the third participant. An SMPC scheme providing computational security can be realized for n = 2 and t = 1 based on the Paillier cryptosystem.

Secure Multiparty AES (MPC AES) is based on an SMPC scheme and implements the AES encryption and decryption interactively in a distributed manner. For the MPC AES execution, each participant initially has to hold a share of the AES key as well as a share of the clear- or ciphertext. These have to be shared bytewise. At the end of the protocol execution each participant holds a share of the ciphertext (encryption) or of the cleartext (decryption). These shares can then be combined to a valid cipher- or cleartext.

In the example of FIG. 2, each participant in the secure multiparty computation receives as a result of the computation a secret share of the nonce value 510. During all this computation the first computer 1001 and the at least one trusted computer 1004 neither learn about the key 400 nor the nonce value 510. Both remain hidden during the whole execution of the secure multiparty computation protocol. After the multiparty computation, the first computer 1001 sends its secret share of the nonce value 510 to the at least one trusted computer 1004, where the nonce value 510 is recombined for further use. Note that the nonce value 510 remains unknown to the first computer. In this context, it is important that the at least one trusted computer does not know the encrypted nonce value. Otherwise, the PIN could be guessed by the at least one trusted computer.

Finally the second computer 1002 receives 5510 prove that the user 1 is in control of the first secret share of the key 400 because otherwise it would not have been possible to compute the nonce value 510 in the secure multiparty computation 5500 with the secret share pairs of the first computer. This is equivalent to the user, who entered the iPIN at the first computer, giving consent to establishing the connection. Once the second computer 1002 is convinced by the proof it may grant 5600 access to the first computer 1001 to use 5700 the second computer (e.g., the identity prove function of the respective eID card) to use services such as online banking or governmental services like tax declaration.

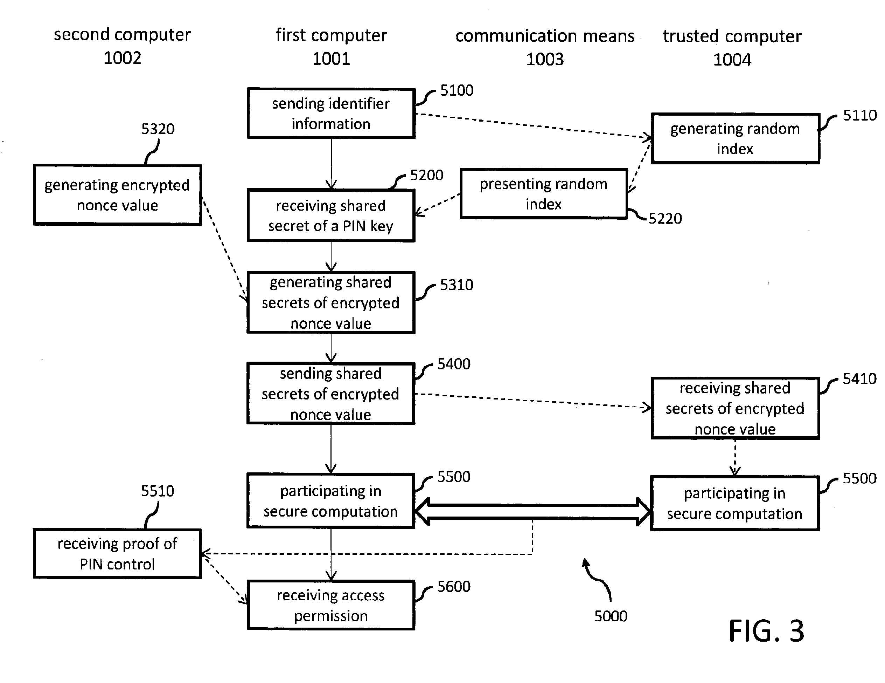

FIG. 3 is a simplified flowchart of a computer implemented method 5000 according to one embodiment of the invention for securing PIN based access from a first computer 1001 to the second computer 1002 (cf. FIG. 2). The boxes underneath the computer names represent steps performed by the respective computer. The steps of the first computer are connected by solid arrows illustrating the method flow from the perspective of the first computer. Dashed arrows illustrate the method flow including intermediate steps performed by the other computers. The simplified flow chart shows the method with one trusted computer 1004. A person skilled in the art can easily adapt the method when multiple trusted computers are involved.

Before the method 5000 starts, the user of the first computer has registered with the trusted computer and, therefore, is already known by the trusted computer. When a user of the first computer wants to consume a service, which requires authentication of the user, the first computer sends 5100 identifier information of the first computer to the trusted computer.

The trusted computer generates 5110 a random index value as described under FIG. 2. The random index value is also referred to as random index herein. Further, the random index is associated with corresponding secret shares of a key derived from a PIN used for the PIN based access. The random index is associated with a secret share in a list of secret shares of the key, which is stored on the trusted computer. All the secret shares of the key stored in the list of the trusted computer were created previously by using an appropriate secret sharing algorithm. In case of multiple trusted computers each of the trusted computers stores its own individual list of secret shares of the key. In case of using multiple trusted computers, the random index points to corresponding secret shares of the key also in each corresponding further list of secret shares at the other trusted computers.

The trusted computer then sends the random index to the communication means, where it is presented 5220 to the user of the first computer. In case the identifier information also includes a service certificate of the service, this certificate is also sent to the communication means, where it is presented to the user. That is, if the certificate is wrong, the user will notice it and may abort the transaction. However, if the certificate that is shown to the user is correct, there is no way for the adversary to exchange it afterwards to deviate the communication to another service than intended because the at least one trusted computer 1004, 1005, which cannot be influenced by the adversary, guarantees for the correct handling of the certificate

The user has his/her own list of corresponding secret shares of the key. However, the user's list is not known by the first computer. In case the list is stored electronically, the respective storage device should not be communicatively coupled with the first computer. For example, the list could be stored on the communication means, where the correct iPIN may be shown automatically upon receiving the random index, and can be securely deleted afterwards. From the list the user is in control of the user then selects a first secret share of the key, which is associated with the random index presented by the communication means. This first secret share of the key is then received 5200 by the first computer via an input device of the first computer. For example any device with a human user interface may be used. At this stage the first computer knows a secret share of the key and the trusted computer knows a corresponding secret share of the key.

The second computer may generate a nonce value independently from all previously described steps. It may also be generated in response to the access request from the first computer. The second computer can be the owner of the PIN. For example, the PIN can be hard coded on a chip card or stored in a specific memory portion of the second computer. If the memory portion is a rewritable memory, then the user may be able to change the original PIN into a user defined PIN by interacting with the second computer accordingly. Knowing the PIN the second computer can use a key derivation function to compute the key derived from the PIN. Alternatively, the second computer simply knows the key as described earlier. The second computer may then encrypt the nonce value with the key, thus generating 5320 an encrypted nonce value. This encrypted nonce value can only be decrypted by somebody knowing the key and therefore being in control of the PIN or at least being in control of equivalent information. In the described embodiment, where the first secret share of the key is mandatory information for recombining the PIN, being in control of the first secret share is equivalent to being in control of the PIN. The encrypted nonce value is then sent to the first computer. However, the first computer does not know the key. It only has the first secret share of the key.

The first computer then uses the secret sharing algorithm to generate 5310 a set of further secret shares of the encrypted nonce value for the first computer and for the trusted computer. It is important that a corresponding secret sharing algorithm is used as for the generation of the secret shares of the key. At this stage the first computer has a first secret share of the key and a further first secret share of the encrypted nonce value. The trusted computer only has the corresponding secret share of the key but is still lacking the corresponding further secret share of the encrypted nonce value. Therefore, the first computer now sends 5400 the corresponding further secret share of the encrypted nonce value to the trusted computer. In case of multiple trusted computers all trusted computers will receive a corresponding further secret share, respectively.

At this stage also each trusted computer has a pair of a secret share of the key and the further secret share of the encrypted nonce value. Each of those pairs corresponds to the pair of secret shares at the first computer. Each computer holding such a pair of corresponding secret shares can now participate 5500 (illustrated by the double arrow) in secure multiparty computation for computing the nonce value, while the nonce value always remains hidden from the first computer in the secure multiparty computation. Each participant in the secure multiparty computation receives as a result of the computation a secret share of the cleartext nonce value. During all this computations, neither the first computer nor the at least one trusted computer learn about neither the key 400 nor the nonce value 510. Both remain hidden during the whole execution of the secure multiparty computation protocol. After the multiparty computation, the first computer 1001 sends its secret share of the cleartext nonce value to the at least one trusted computer 1004, where the nonce value can be recombined. Using a suitable protocol (e.g. the PACE steps c - j, cf. FIG. 1), it can be proven 5510 to the second computer that the first computer and the trusted computer(s) together were able to compute the nonce value. Being able to compute the nonce value is equivalent to having the PIN. This is because having the PIN the key can be easily computed by applying the key derivation function. Having the key, the PIN can be easily computed by trial and error using the encrypted nonce value. Thus, having one of either PIN or key easily leads to knowing the other, which makes their knowledge equivalent. The nonce value could be computed because the knowledge about the key derived from the PIN was distributed by secret shares across the participants. In some embodiments of the invention it may be sufficient to combine two pairs of secret shares from two participants. Other embodiments may require three, four, or more secret shares to be combined. It is also possible that the overall number of distributed secret shares is bigger than the number of secret shares required for recombination of the nonce value. It is advantageous if one pair of the secret shares used by the secure multiparty computation comes from the first computer because this indicates the user's control over the first iPIN list. Theoretically, in case of multiple trusted computers, the pair of secret shares of the first computer would not be needed at all. However, this would require extra consent of the user for the overall decryption of the nonce value. The main role of the first computer is to receive the first secret share from the user and the creation of the further secret shares for the encrypted nonce value. Also depending on the applied secret sharing scheme, the multiparty computation can be perfectly secure or computationally secure.

In case the secure computation of the nonce value finally proves to the second computer that the user of the first computer consents the first computer receives 5600 access permission from the second computer 1002.

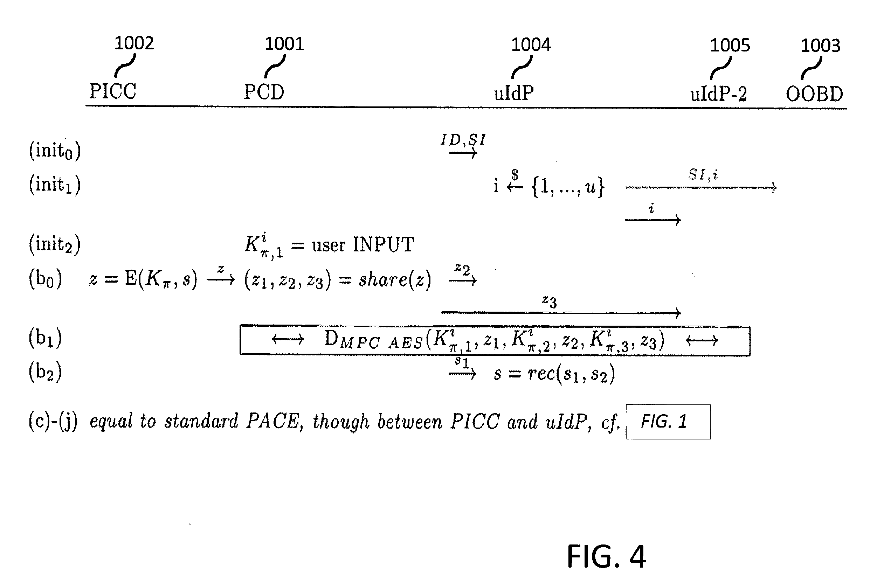

FIG. 4 is a detailed protocol view of the inventive protocol involving two trusted computers uldP 1004 and uldP-2 1005. In FIG. 4, the same terminology is used as it was used when explaining the PACE prior art protocol. This makes it easier to highlight the improvements over the prior art. OOBD stands for an Out Of Band Device such as a mobile phone.

The embodiments of the invention make use of iPINs and combine this mechanism with a remote PACE execution. Therewith, the reconfirmation of a specific service's certificate, which can be part of the identifier information, is possible. Hence, the user PIN is never revealed and protection from MitM attacks can be guaranteed. This requires some setup phase and enables the uldP to monitor the traffic of the eID functionality. A second trusted computer uldP-2 can be used to support MPC AES decryption. A person skilled in the art will appreciate that also other combinations of the different techniques described above are possible, but not explained here.

We assume an adversary that is able to compromise any participant, but at most one at the same time. Furthermore, the uldPs are trustworthy in the sense that they do not collude to obtain the PIN and act reasonably to protect themselves and the user. This includes, for example, that the uldP is assumed not to store communication transcripts of the user.

The setup phase includes the generation of iPIN lists from the key K_{π} within a secure environment and their respective distribution. In addition, the user may deposit his/her mobile phone number at the uldP to enable out of band communication, i.e., a communication channel which is independent from the channels between the PICC, PCD and the uldPs. Note that the PIN π is not transferred to any of the uldPs.

FIG. 4 depicts the protocol steps.

To initialize the protocol run (step (init0)), the PCD sends the user ID and optionally the service's certificate (SI) to the uldP. With the ID, the uldP identifies the user and loads the user's data.

In step (init1), the uldP randomly chooses an iPIN index i and sends i along with the service's certificate to the user's OOBD. At the same time the uldP sends i to uldP-2.

In step (init2), the user enters the correct iPIN Kⁱ _{π,1} taken from his/her list into the PCD to show his consent, while uldP and uldP-2 load the iPINs with the announced index from their respective lists. iPINs denote indexed onetime passwords derived from the key K_{π}. Given the user's iPIN and the uldP's iPIN with the same index it is possible to reconstruct the key K_{π}, which is usually derived by the PICC and PCD from the PIN π during the PACE run. From a security point of view, the knowledge of the derived key K_{π} is equivalent to the knowledge of π. By handling the card PIN π exclusively in form of shared (onetime) iPINs that change in each protocol run PIN compromise attacks are prevented. By additionally using the OOBD Man-in-the-middle (MitM) attacks are prevented.

In step (b0), the PCD receives the encrypted nonce z from the PICC. The PCD shares z and sends one share to the uldP and another one to the uldP-2, while the third one is kept by the PCD.

In step (b1) the PCD, uldP and uldP-2 jointly execute the decryption function using MPC AES and each participant obtains a different share of the nonce s. The used iPINs can now be securely deleted by uldP and uldP-2.

In step (b2), the PCD transmits its share to the uldP where s is reconstructed. Then, the standard PACE steps (c)-(j) (cf. FIG. 1) are executed between PICC and uldP, while the PCD only forwards the messages between them.

In other words, steps (a) and (b) of the PACE protocol (cf. FIG. 1) are replaced by the steps (init0) to (b2) of the protocol shown in FIG. 4. The steps (c) to (j) of PACE are conducted as specified, however between the PICC and the uldP. The actual number of uldPs involved in embodiments of the invention is not fixed to two (as shown in the example above). Any number of uldPs, starting from one, is possible.

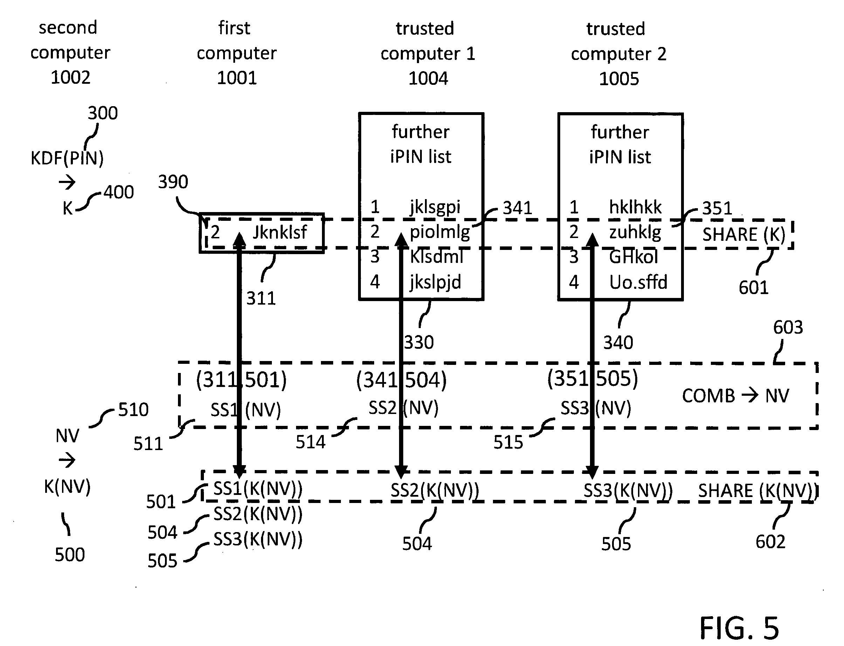

FIG. 5 illustrates secure multiparty computation according to the invention with two trusted computers in more detail. The shown example with two trusted computers 1004, 1005 may allow perfectly secure computation when also including the first computer 1001 in the secure multiparty computation protocol. Whereas secure multiparty computation based on secret sharing algorithms can be computational secure (unbreakable within a reasonable period of time) when using at least two secret shares, such algorithms may become perfectly secure (provably unbreakable) by using at least three secret shares. In the perfectly secure embodiment the key 400 may be shared in three secret shares 311, 341, 351. The secret shares are created by some trusted authority and are then securely deployed to the respective computers. Note that the first computer 1001 only has the secret share 311 that is associated with the random index 390 and which was received from the user, whereas the trusted computers are in control of the complete iPIN lists 330, 340. The dashed square 601 indicates corresponding secret shares which are needed by a secure multiparty computation protocol to compute the key 400.

The first computer 1001 uses the same or at least a corresponding secret sharing algorithm as above to generate the three secret shares 501, 504, 505 (SS1, SS2, SS3) of the encrypted nonce value 500, where two of them (SS2, SS3) are distributed to the respective trusted computers 1004, 1005. The dashed square 602 indicates the corresponding secret shares from the secure multiparty computation which are needed to finally compute the nonce value 510.

Therefore, by applying the secure multiparty computation to all the respective pairs of secret shares shown in the dashed square 603, each participant finally will hold a secret share 511, 514, 515 of the nonce value 510, respectively.

The first computer 1001 can then provide its secret share 511 of the nonce value 510 to anyone of the trusted computer 1004, 1005. The respective trusted computer will then combine the secret shares and compute the nonce value 510, which can then be used for the respective proof to the second computer.

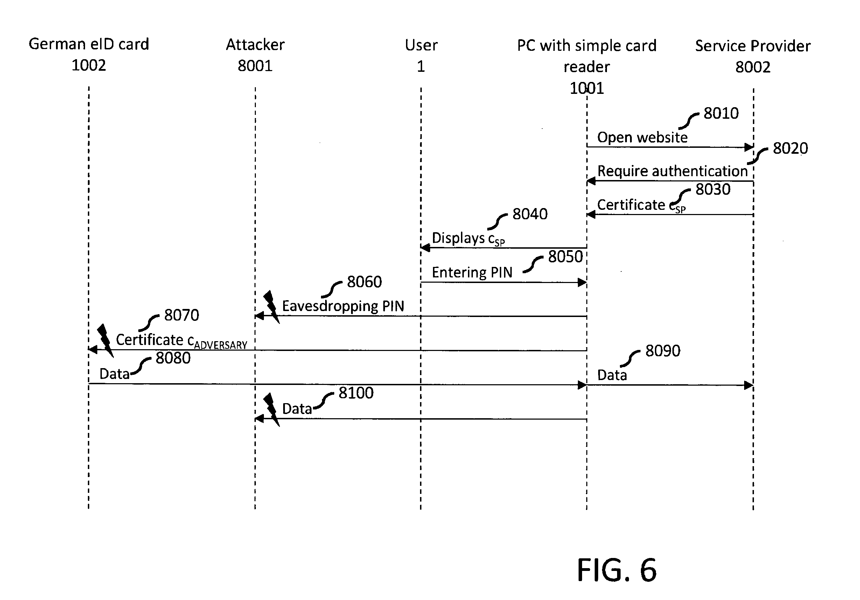

FIG. 6 illustrates examples of use for specific aspects according to the invention. It shows different attack scenarios that are possible when using standard PACE (without the inventive modifications). For each attack it is explained why this is not possible when using the inventive modifications according to embodiments of the invention.

The presented scenarios include the following players: a user 1 who connects to a service provider 8002 from his PC with simple card reader 1001 (first computer). The user 1 uses his German eID card 1002 (second computer) to authenticate to the service provider 8002. The user 1 is attacked by an attacker 8001, who controls the PC 1001 via malware.

To use the service, the user 1 connects 8010 to the service provider 8002 using, for example, a web browser on his PC 1001. The service provider 8002 replies 8020 with a corresponding authentication request and also sends 8030 the service's certificate C_{SP} to the PC 1001. The PC displays 8040 the certificate C_{SP} to the user 1. The user 1 enters 8050 his PIN into the PC 1001 to show his consent and to start the authentication process.

As the attacker 8001 controls the PC 1001, he can eavesdrop 8060 on the user 1 while entering the PIN and now can commit identity fraud whenever the user 1 put his eID on the card reader.

This attack is not possible when using the inventive modifications, as the user 1 here only enters a iPIN which is useless for the attacker 8001 as he lacks the corresponding iPINs from the uldPs (cf. FIG 4: 1004, 1005). Additionally, the user's iPIN the attacker is able to capture is only valid for the current session.

As the attacker 8001 controls the PC 1001, he can send 8070 a certificate C_{adversary} which is different to the certificate C_{SP} to the eID card 1002. This way, the user authenticates to a service chosen by the attacker instead of to the service provider as intended without noticing it. By this, the attacker captures 8100 the data send 8080 by the eID card 1002 to the PC 1001 that is intended to arrive 8090 at the service provider.

This attack is not possible when using the inventive modifications, as the certificate is first sent to the uldP (cf. FIG 4: 1004) and then shown to the user 1 via the independent channel established by the out of band device (OOBD) (cf. Fig 4: 1003). In case the attacker 8001 sends the malicious certificate C_{adversary} to the uldP 1004, the user 1 becomes aware of it as it is displayed be the OOBD 1003. In case the attacker 8001 sends the correct certificate C_{SP} to the uldP 1004, the attacker has no chance to exchange it later, as the uldP 1004 sends the certificate C_{SP} to the eID card 1002 via the secured PACE channel for which the attacker 8001 does not know the key.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program as claimed, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The method described under FIG. 3 can all be executed by corresponding computer products on the respective devices, e.g., the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, optical disks or solid state disks. Such storage devices may also provisioned on demand and be accessible through the Internet (e.g., Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. A computer implemented method (5000) for securing PIN based access from a first computer (1001) to a second computer (1002), comprising:
sending (5100) identifier information (ID1, ID1a) from the first computer (1001) to at least one trusted computer (1004, 1005), wherein the identifier information (ID1, ID1a) has a portion to identify a user (1) of the first computer (1001) at the at least one trusted computer (1004, 1005);
receiving (5200) on the first computer (1001) from the user (1) a first secret share (311) of a key (400) derived from a PIN (300) used for the PIN based access, wherein the first secret share (311) is associated with at least one corresponding secret share (341, 351) at the at least one trusted computer (1004, 1005);
generating (5310) at the first computer (1001) for an encrypted nonce value (500) received (5300) from the second computer (1002) a set of further secret shares (501, 504, 505) for the first computer (1001) and for the at least one trusted computer (1004, 1005), wherein the encrypted nonce value (500) is a nonce value (510) encrypted with the key (400);
sending (5400) corresponding secret shares (504, 505) of the encrypted nonce value (500) to the corresponding at least one trusted computer (1004, 1005), respectively;
participating (5500) in a secure multiparty computation of the nonce value (510), wherein the secure computation is based on corresponding pairs ((311,501), (341,504), (351,505)) of the secret shares (311, 341, 351) of the key (400) and the secret shares (501, 504, 505) of the encrypted nonce value (500), and wherein the computed nonce value (510) is hidden from the first computer (1001); and
receiving (5600) at the first computer (1001) access permission from the second computer (1002) in case the secure multiparty computation results in the nonce value (510) generated originally by the second computer (1002).

2. The method of claim 1, wherein participating (5500) further comprises:
deriving at the first computer (1001) a first secret share (511) of the nonce value (510) based on the corresponding pair (311,501); and
sending the first secret share (511) of the nonce value (510) to the at least one trusted computer (1004, 1005) to be combined with further secret shares (514, 515) of the nonce value (510) to compute the nonce value (510).

3. The method of claim 1 or 2, wherein the first secret share (311) is associated with an association identifier (390) generated by the at least one trusted computer (1004, 1005) in response to the identifier information (ID1, ID1a), and the association identifier (390) is received by the user (1) from the at least one trusted computer (1004, 1005) via a communication means (1003).

4. The method of claim 3, wherein the association identifier is a random index (390), which is associated with a specific position in a first list (320) of secret shares of the key (400) and with associated positions in at least one further list (330, 340) of secret shares of the key (400), wherein the first list (320) of secret shares is under control of the user (1) and the at least one further list (330, 340) is stored on the at least one trusted computer (1004, 1005).

5. The method of anyone of the previous claims, wherein the identifier information (ID1, ID1a) includes a different identifier of the user (1) for each trusted computer (1004, 1005).

6. The method of anyone of the previous claims, wherein the identifier information (ID1, ID1a) has a further portion comprising a certificate of a service for the user (1).

7. The method of claim 6, wherein the certificate is provided by the at least one trusted computer (1004, 1005) to the communication means (1003) for outputting to the user (1).

8. The method of anyone of the previous claims, wherein each secret share of the key (400) is deleted by the respective trusted computer (1004, 1005) after participation in the respective secure multiparty computation.

9. A computer program product that when loaded into a memory of a computing device and executed by at least one processor of the computing device executes the steps of the computer implemented methods according to of anyone of the claims 1 to 8.

10. A first computer (1001) for securing PIN based access to a second computer (1002) comprising:
an interface component configured:
to receive (5200) from a user (1) a first secret share (311) of a key (400) derived from a PIN (300) used for the PIN based access, wherein the first secret share (311) is associated with at least one corresponding secret share (341) of at least one trusted computer (1004, 1005);
to receive (5300) an encrypted nonce value (500) from the second computer (1002), wherein the encrypted nonce value (500) is a nonce value (510) encrypted with the key (400);
to send (5400) corresponding secret shares (504, 505) of the encrypted nonce value (500) to the corresponding at least one trusted computer (1004, 1005), respectively;
to provide the first secret share (311) of the key (400) and a corresponding secret share (501) of the encrypted nonce value (500) for secure multiparty computation of the nonce value (510); and
to receive access permission to the second computer (1002) in response to the input of the first secret share (311) of the key (400) in case the secure multiparty computation results in the nonce value (510) generated originally by the second computer (1002);
and
a processor component configured:
to generate (5310) the corresponding secret shares (501, 504, 505) of the encrypted nonce value (500) for the first computer (1001) and for the at least one trusted computer (1004, 1005); and
to participate in the secure multiparty computation of the nonce value (510), while the nonce value (510) remains hidden from the first computer (1001).

11. The computer of claim 10, wherein the interface component is further configured to:
send (5100) identifier information (ID1, ID1a) to the at least one trusted computer (1003, 1004), wherein the identifier information (ID1, ID1a) has a portion which identifies the user (1) of the first computer (1001) at the at least one trusted computer (1004, 1005) and/or has a further portion comprising a certificate of a service for the user (1).

12. The computer of claim 11 or 12, wherein the processer component is further configured to:
derive a first secret share (511) of the nonce value (510) based on the first secret share (311) of the key (400) and the corresponding secret share (501) of the encrypted nonce value (500); and
send the first secret share (511) of the nonce value (510) to the at least one trusted computer (1004, 1005) to be combined with further secret shares (514, 515) of the nonce value (510) to compute the nonce value (510).

13. A computer system (1000) for securing PIN based access of a first computer (1001) to a second computer (1002) comprising:
the first computer (1001), the second computer (1002), a communication means (1003) and at least one trusted computer (1004, 1005), wherein the first computer (1001), the second computer (1002), and the at least one trusted computer (1004, 1005) are communicatively coupled and the communication means (1003) is communicatively coupled with the at least one trusted computer (1004, 1005);
the first computer (1001) being configured to:
request access to the second computer (1002) by using a first secret share (311) of a key (400) derived from a PIN (300), wherein the first secret share (311) of the key (400) is associated with at least one corresponding secret share (341, 351) stored on the at least one trusted computer (1003, 1004);
to send identifier information (ID1, ID1a) to at least one trusted computer (1005, 1004), wherein the identifier information (ID1, ID1a) has portion to identify a user (1) of the first computer (1001) to the at least one trusted computer (1005, 1004);
generate for an encrypted nonce value (500) from the second computer (1002) a set of secret shares (501, 503, 504) for the first computer (1001) and for the at least one trusted computer (1003, 1004) by using the secret sharing algorithm; and
participate in a secure multiparty computation of the nonce value (510), wherein the secure multiparty computation is based on corresponding pairs ((311,501), (341,504), (351,505)) of the secret shares (311, 341, 351) of the key (400) and the secret shares (501, 504, 505) of the encrypted nonce value (500); and
the second computer (1002) being configured to:
generate the nonce value (510) and to encrypt the nonce value (510) with the key (400) resulting in the encrypted nonce value (500); and
to accept the access request of the first computer (1001) in case the result of the secure multiparty computation corresponds to the original nonce value (510);
the at least one trusted computer (1005, 1004) being configured to:
generate an association identifier (390) in response to the identifier information (ID1, ID1a) and provide the association identifier (390) to the communication means (1003), wherein the association identifier (390) is associated with corresponding secret shares of the key (400) at the at least one trusted computer (1004, 1005); and
participate in the secure computation of the nonce value (510), while hiding the nonce value (510) from the first computer (1001);
and
the communication means (1003) being configured to:
receive the association identifier (390) from the at least one trusted computer (1005, 1004) and provide the association identifier (390) to the user (1).

14. The system of claim 13, wherein the at least one trusted computer (1005, 1004) is further configured to delete each secret share of the key (400) after participation in the respective secure multiparty computation.

15. The system of claim 13 or 14, wherein the communication means (1003) is further configured to receive a certificate of a service from the at least one trusted computer (1004, 1005) for outputting to the user (1), wherein the certificate is comprised by a further portion of the identifier information (ID1, ID1a).

## Patentansprüche

1. Computerimplementiertes Verfahren (5000) zum Sichern eines PIN-basierten Zugriffs von einem ersten Computer (1001) auf einen zweiten Computer (1002), umfassend:
Senden (5100) von Kennungsinformationen (ID1, ID1a) von dem ersten Computer (1001) zu mindestens einem vertrauenswürdigen Computer (1004,1005), wobei die Kennungsinformationen (ID1, ID1a) einen Abschnitt aufweisen, um an dem mindestens einen vertrauenswürdigen Computer (1004, 1005) einen Benutzer (1) des ersten Computers (1001) zu identifizieren;
Empfangen (5200) auf dem ersten Computer (1001) von dem Benutzer (1) eines ersten geheimen Teils (311) eines Schlüssels (400), der von einem PIN (300), der für den PINbasierten Zugriff verwendet wird, abgeleitet ist, wobei der erste geheime Teil (311) mit mindestens einem entsprechenden geheimen Teil (341, 351) an dem mindestens einen vertrauenswürdigen Computer (1004, 1005) verbunden ist;
Erzeugen (5310) an dem ersten Computer (1001) für einen verschlüsselten Nonce-Wert (500), der von dem zweiten Computer (1002) empfangen (5300) wird, eines Satzes von weiteren geheimen Teilen (501, 504, 505) für den ersten Computer (1001) und für den mindestens einen vertrauenswürdigen Computer (1004, 1005), wobei der verschlüsselte Nonce-Wert (500) ein mit dem Schlüssel (400) verschlüsselter Nonce-Wert (510) ist;
Senden (5400) der entsprechenden geheimen Teile (504, 505) des verschlüsselten Nonce-Werts (500) zu dem jeweils entsprechenden mindestens einen vertrauenswürdigen Computer (1004, 1005);
Partizipieren (5500) in einer sicheren Mehrparteien-Berechnung des Nonce-Werts (510), wobei die sichere Berechnung auf entsprechenden Paaren ((311,501) (341,504) (351,505)) der geheimen Teile (311, 341, 351) des Schlüssels (400) und der geheimen Teile (501, 504, 505) des verschlüsselten Nonce-Werts (500) basiert, und wobei der berechnete Nonce-Wert (510) vor dem ersten Computer (1001) verborgen ist; und
Empfangen (5600) an dem ersten Computer (1001) Zugriffserlaubnis von dem zweiten Computer (1002) im Falle dass, die sichere Mehrparteien-Berechnung zu dem Nonce Wert (510) führt, der ursprünglich von dem zweiten Computer (1002) erzeugt wurde.

2. Verfahren nach Anspruch 1, wobei Partizipieren (5500) ferner umfasst:
Ableiten an dem ersten Computer (1001) eines ersten geheimen Teils (511) des Nonce-Werts (510) basierend auf dem entsprechenden Paar (311,501); und
Senden des ersten geheimen Teils (511) des Nonce-Werts (510) zu dem mindestens einen vertrauenswürdigen Computer (1004, 1005), um mit weiteren geheimen Teilen (514, 515) des Nonce-Werts kombiniert zu werden, um den Nonce-Wert (510) zu berechnen.

3. Verfahren nach Anspruch 1 oder 2, wobei der erste geheime Teil (311) mit einer zugehörigen Zuordnungskennung (390) verbunden ist, die von dem mindestens einen vertrauenswürdigen Computer (1004, 1005) als Reaktion auf die Kennungsinformationen (ID1, ID1a) erzeugt wird, und die Zuordnungskennung (390) von dem Benutzer (1) von dem mindestens einen vertrauenswürdigen Computer (1004, 1005) über ein Kommunikationsmittel (1003) empfangen wird.

4. Verfahren nach Anspruch 3, wobei die Zuordnungskennung eine Zufallszahl (390) ist, die mit einer bestimmten Position in einer ersten Liste (320) von geheimen Teilen des Schlüssels (400) und mit verbundenen Positionen in mindestens einer weiteren Liste (330, 340) der geheimen Teile des Schlüssels (400) verbunden ist, wobei die erste Liste (320) von geheimen Teilen unter Kontrolle des Benutzers (1) steht und die mindestens eine weitere Liste (330, 340) auf dem mindestens einen vertrauenswürdigen Computer (1004, 1005) gespeichert wird.

5. Verfahren nach einem der vorhergehenden Ansprüche, wobei die Kennungsinformationen (ID1, ID1a) für jeden vertrauenswürdigen Computer (1004, 1005) eine andere Kennung des Benutzers (1) einschließen.

6. Verfahren nach einem der vorhergehenden Ansprüche, wobei die Kennungsinformationen (ID1, ID1a) einen weiteren Abschnitt aufweisen, der ein Zertifikat eines Dienstes für den Benutzer (1) umfasst.

7. Verfahren nach Anspruch 6, wobei das Zertifikat von dem mindestens einen vertrauenswürdigen Computer (1004, 1005) an dem Kommunikationsmittel (1003) zur Ausgabe an den Benutzer (1) bereitgestellt wird.

8. Verfahren nach einem der vorhergehenden Ansprüche, wobei jeder geheime Teil des Schlüssels (400) von dem jeweiligen vertrauenswürdigen Computer (1004, 1005) nach der Partizipation an der jeweiligen sicheren Mehrparteien-Berechnung gelöscht wird.

9. Computerprogrammprodukt, das, wenn es in einen Speicher einer Datenverarbeitungseinrichtung geladen und durch mindestens einen Prozessor der Datenverarbeitungseinrichtung ausgeführt wird, die Schritte der Computer-implementierten Verfahren nach einem der Ansprüche 1 bis 8 ausführt.

10. Erster Computer (1001) zum Sichern eines PIN-basierten Zugriffs auf einen zweiten Computer (1002), umfassend:
eine Schnittstellenkomponente, die konfiguriert ist, um:
von dem Benutzer (1) einen ersten geheimen Teil (311) eines Schlüssels (400) zu empfangen, der von einem PIN (300) für den PIN-basierten Zugriff abgeleitet ist, wobei der erste geheime Teil (311) mit mindestens einem entsprechenden geheimen Teil (341) von mindestens einem vertrauenswürdigen Computer (1004, 1005) verbunden ist;
einen verschlüsselten Nonce-Wert (500) von dem zweiten Computer (1002) zu empfangen (5300), wobei der verschlüsselte Nonce-Wert (500) ein mit dem Schlüssel (400) verschlüsselter Nonce-Wert (510) ist;
entsprechende geheime Teile (504, 505) des verschlüsselten Nonce-Werts (500) zu dem entsprechenden mindestens einen vertrauenswürdigen Computer (1004, 1005) zu senden;
den ersten geheimen Teil (311) des Schlüssels (400) und einen entsprechenden geheimen Teil (501) des verschlüsselten Nonce-Werts (500) zur sicheren Mehrparteien-Berechnung des Nonce-Werts (510) bereitzustellen; und
Zugriffserlaubnis auf den zweiten Computer (1002) als Reaktion auf die Eingabe des ersten geheimen Teils (311) des Schlüssels (400) im Falle zu erhalten, dass die sichere Mehrparteien-Berechnung zu dem Nonce-Wert (510) führt, der ursprünglich von dem zweiten Computer (1002) erzeugt wurde; und
eine Prozessorkomponente, die konfiguriert ist, um:
die entsprechenden geheimen Teile (501, 504, 505) des verschlüsselten Nonce-Werts (500) für den ersten Computer (1001) und für den mindestens einen vertrauenswürdigen Computer (1004, 1005) zu erzeugen (5310); und
an der sicheren Mehrparteien-Berechnung des Nonce-Werts (510) zu partizipieren, während der Nonce-Wert (510) vor dem ersten Computer (1001) verborgen bleibt.

11. Computer nach Anspruch 10, wobei die Schnittstellenkomponente ferner konfiguriert ist, um:
Kennungsinformationen (ID1, ID1a) an den mindestens einen vertrauenswürdigen Computer (1003 1004) zu senden (5100), wobei die Kennungsinformationen (ID1, ID1a) einen Abschnitt aufweisen, der den Benutzer (1) des ersten Computers (1001) an dem mindestens einen vertrauenswürdigen Computer (1004, 1005) identifiziert und/oder einen weiteren Abschnitt aufweist, der ein Zertifikat eines Dienstes für den Benutzer (1) umfasst.

12. Computer nach Anspruch 11 oder 12, wobei die Prozessorkomponente ferner konfiguriert ist, um:
einen ersten geheimen Teil (511) des Nonce-Werts (510) basierend auf dem ersten geheimen Teil (311) des Schlüssels (400) und des entsprechenden geheimen Teils (501) des verschlüsselten Nonce-Werts (500) abzuleiten; und
den ersten geheimen Teil (511) des Nonce-Werts (510) zu dem mindestens einen vertrauenswürdigen Computer (1004, 1005) zu senden, um mit weiteren geheimen Teilen (514, 515) des Nonce-Werts (510) kombiniert zu werden, um den Nonce-Wert (510) zu berechnen.

13. Computersystem (1000) zum Sichern eines PIN-basierten Zugriffs eines ersten Computers (1001) auf einen zweiten Computer (1002), umfassend:
den ersten Computer (1001), den zweiten Computer (1002), ein Kommunikationsmittel (1003) und mindestens einen vertrauenswürdigen Computer (1004, 1005), wobei der erste Computer (1001), der zweite Computer (1002) und der mindestens eine vertrauenswürdige Computer (1004, 1005) kommunikativ gekoppelt sind und das Kommunikationsmittel (1003) mit dem mindestens einen vertrauenswürdigen Computer (1004, 1005) kommunikativ gekoppelt ist;
wobei der erste Computer (1001) konfiguriert ist, um
Zugriff auf den zweiten Computer (1002) durch Verwendung eines ersten geheimen Teils (311) eines Schlüssels (400), der von einem PIN (300) abgeleitet ist, anzufordern, wobei der erste geheime Teil (311) des Schlüssels (400) mit mindestens einem entsprechenden geheimen Teil (341, 351) verbunden ist, der auf dem mindestens einen vertrauenswürdigen Computer (1003,1004) gespeichert ist;
Kennungsinformationen (ID1, ID1a) zu dem mindestens einen vertrauenswürdigen Computer (1005, 1004) zu senden, wobei die Kennungsinformationen (ID1, ID1a) einen Abschnitt aufweisen, um dem mindestens einen vertrauenswürdigen Computer (1005, 1004) einen Benutzer (1) des ersten Computers (1001) zu identifizieren;
für einen verschlüsselten Nonce-Wert (500) des zweiten Computers (1002) einen Satz von geheimen Teilen (501, 504, 505) für den ersten Computer (1001) und für den mindestens einen vertrauenswürdigen Computer (1003, 1004) durch Verwendung des geheimen Teilungsalgorithmus zu erzeugen; und
in einer sicheren Mehrparteien-Berechnung des Nonce-Werts (510) zu partizipieren, wobei die sichere Mehrparteien-Berechnung auf entsprechenden Paaren ((311,501) (341,504) (351,505)) der geheimen Teile (311, 341, 351) des Schlüssels (400) und der geheimen Teile (501, 504, 505) des verschlüsselten Nonce-Werts (500) basiert; und
wobei der zweite Computer (1002) konfiguriert ist, um:
den Nonce-Wert (510) zu erzeugen und den Nonce-Wert (510) mit dem Schlüssel (400) zu verschlüsseln, was zu dem verschlüsselten Nonce-Wert (500) führt; und
die Zugriffsanforderung des ersten Computers (1001) für den Fall anzunehmen, dass das Ergebnis der sicheren Mehrparteien-Berechnung dem ursprünglichen Nonce-Wert (510) entspricht;
wobei der mindestens eine vertrauenswürdige Computer (1005, 1004) konfiguriert ist, um:
eine Zuordnungskennung (390) als Reaktion auf die Kennungsinformationen (ID1, ID1a) zu erzeugen, und die Zuordnungskennung (390) dem Kommunikationsmittel (1003) bereitzustellen, wobei die Zuordnungskennung (390) mit entsprechenden geheimen Teilen des Schlüssels (400) an dem mindestens einen vertrauenswürdigen Computer (1004, 1005) verbunden ist; und
an der sicheren Berechnung des Nonce-Werts (510) zu partizipieren, während der Nonce-Wert (510) vor dem ersten Computer (1001) verborgen wird;
und
wobei das Kommunikationsmittel (1003) konfiguriert ist, um:
die Zuordnungskennung (390) von dem mindestens einen vertrauenswürdigen Computer (1005, 1004) zu erhalten und dem Benutzer (1) die Zuordnungskennung (390) bereitzustellen.

14. System nach Anspruch 13, wobei der mindestens eine vertrauenswürdige Computer (1005, 1004) ferner konfiguriert ist, um jeden geheimen Teil des Schlüssels (400) nach der Partizipation an der jeweiligen sicheren Mehrparteien-Berechnung zu löschen.

15. System nach Anspruch 13 oder 14, wobei das Kommunikationsmittel (1003) ferner konfiguriert ist, um ein Zertifikat eines Dienstes von dem mindestens einen vertrauenswürdigen Computer (1004, 1005) zur Ausgabe an den Benutzer (1) zu empfangen, wobei das Zertifikat von einem weiteren Teil der Kennungsinformationen (ID1, ID1a) umfasst ist.

## Revendications

1. Procédé mis en oeuvre par ordinateur (5000) pour sécuriser un accès par code NIP d'un premier ordinateur (1001) à un second ordinateur (1002), comprenant :
l'envoi (5100) d'informations d'identifiant (ID1, ID1a) du premier ordinateur (1001) à au moins un ordinateur de confiance (1004, 1005), dans lequel les informations d'identifiant (ID1, ID1a) possèdent une partie pour identifier un utilisateur (1) du premier ordinateur (1001) au niveau de l'au moins un ordinateur de confiance (1004, 1005) ;
la réception (5200) sur le premier ordinateur (1001) en provenance de l'utilisateur (1) d'une première part secrète (311) d'une clé (400) dérivée d'un NIP (300) utilisé pour l'accès par code NIP, dans lequel la première part secrète (311) est associée à au moins une part secrète correspondante (341, 351) au niveau de l'au moins un ordinateur de confiance (1004, 1005) ;
la production (5310) au niveau du premier ordinateur (1001) pour une valeur de nonce chiffrée (500) reçue (5300) du second ordinateur (1002) d'un ensemble de parts secrètes supplémentaires (501, 504, 505) pour le premier ordinateur (1001) et pour l'au moins un ordinateur de confiance (1004, 1005), dans lequel la valeur de nonce chiffrée (500) est une valeur de nonce (510) chiffrée avec la clé (400) ;
l'envoi (5400) des parts secrètes correspondantes (504, 505) de la valeur de nonce chiffrée (500) à l'au moins un ordinateur de confiance correspondant (1004, 1005), respectivement ;
la participation (5500) à un calcul partagé sécurisé de la valeur de nonce (510), dans lequel le calcul sécurisé est basé sur des paires correspondantes (311,501), (341,504), (351,505)) des parts secrètes (311, 341, 351) de la clé (400) et des parts secrètes (501, 504, 505) de la valeur de nonce chiffrée (500), et dans lequel la valeur de nonce calculée (510) est masquée au premier ordinateur (1001) ; et
la réception (5600) au niveau du premier ordinateur (1001) d'une autorisation d'accès en provenance du second ordinateur (1002) dans le cas où le calcul partagé sécurisé donne la valeur de nonce (510) initialement générée par le second ordinateur (1002).

2. Procédé selon la revendication 1, dans lequel la participation (5500) comprend en outre :
la dérivation au niveau du premier ordinateur (1001) d'une première part secrète (511) de la valeur de nonce (510) sur base de la paire correspondante (311,501) ; et
l'envoi de la première part secrète (511) de la valeur de nonce (510) à l'au moins un ordinateur de confiance (1004, 1005) en vue de la combiner avec des parts secrètes supplémentaires (514, 515) de la valeur de nonce (510) pour calculer la valeur de nonce (510).

3. Procédé selon la revendication 1 ou 2, dans lequel la première part secrète (311) est associée à un identifiant d'association (390) généré par l'au moins un ordinateur de confiance (1004, 1005) en réponse aux informations d'identifiant (ID1, ID1a), et l'identifiant d'association (390) est reçu par l'utilisateur (1) en provenance de l'au moins un ordinateur de confiance (1004, 1005) par l'intermédiaire d'un moyen de communication (1003).

4. Procédé selon la revendication 3, dans lequel l'identifiant d'association est un index aléatoire (390), qui est associé à une position spécifique dans une première liste (320) de parts secrètes de la clé (400) et à des positions associées dans au moins une liste supplémentaire (330, 340) de parts secrètes de la clé (400), dans lequel la première liste (320) de parts secrètes est sous le contrôle de l'utilisateur (1) et l'au moins une liste supplémentaire (330, 340) est stockée sur l'au moins un ordinateur de confiance (1004, 1005).

5. Procédé selon l'une quelconque des revendications précédentes, dans lequel les informations d'identifiant (ID1, ID1a) comprennent un identifiant différent de l'utilisateur (1) pour chaque ordinateur de confiance (1004, 1005).

6. Procédé selon l'une quelconque des revendications précédentes, dans lequel les informations d'identifiant (ID1, ID1a) possèdent une partie supplémentaire comprenant un certificat d'un service pour l'utilisateur (1).

7. Procédé selon la revendication 6, dans lequel le certificat est fourni par l'au moins un ordinateur de confiance (1004, 1005) au moyen de communication (1003) pour envoi à l'utilisateur (1).

8. Procédé selon l'une quelconque des revendications précédentes, dans lequel chaque part secrète de la clé (400) est supprimée par l'ordinateur de confiance respectif (1004, 1005) après participation au calcul partagé sécurisé respectif.

9. Produit logiciel qui, lorsqu'il est chargé dans une mémoire d'un dispositif informatique et exécuté par au moins un processeur du dispositif informatique, exécute les étapes des procédés mis en oeuvre par ordinateur selon l'une quelconque des revendications 1 à 8.

10. Premier ordinateur (1001) pour sécuriser un accès par code NIP à un second ordinateur (1002) comprenant :
un composant d'interface configuré :
pour recevoir (5200) d'un utilisateur (1) une première part secrète (311) d'une clé (400) dérivée d'un NIP (300) utilisée pour l'accès par code NIP, dans lequel la première part secrète (311) est associée à au moins une part secrète correspondante (341) d'au moins un ordinateur de confiance (1004, 1005) ;
pour recevoir (5300) une valeur de nonce chiffrée (500) provenant du second ordinateur (1002), dans lequel la valeur de nonce chiffrée (500) est une valeur de nonce (510) chiffrée avec la clé (400) ;
pour envoyer (5400) des parts secrètes correspondantes (504, 505) de la valeur de nonce chiffrée (500) à l'au moins un ordinateur de confiance correspondant (1004, 1005), respectivement ;
pour fournir la première part secrète (311) de la clé (400) et une part secrète correspondante (501) de la valeur de nonce chiffrée (500) pour un calcul partagé sécurisé de la valeur de nonce (510) ; et
pour recevoir une autorisation d'accès au second ordinateur (1002) en réponse à la saisie de la première part secrète (311) de la clé (400) dans le cas où le calcul partagé sécurisé donne la valeur de nonce (510) générée initialement par le second ordinateur (1002) ;
et
un composant processeur configuré :
pour générer (5310) les parts secrètes correspondantes (501, 504, 505) de la valeur de nonce chiffrée (500) pour le premier ordinateur (1001) et pour l'au moins un ordinateur de confiance (1004, 1005) ; et
pour participer au calcul partagé sécurisé de la valeur de nonce (510), tandis que la valeur de nonce (510) demeure masquée au premier ordinateur (1001).

11. Ordinateur selon la revendication 10, dans lequel le composant d'interface est en outre configuré pour :
envoyer (5100) des informations d'identifiant (ID1, ID1a) à l'au moins un ordinateur de confiance (1003, 1004), dans lequel les informations d'identifiant (ID1, ID1a) possèdent une partie qui identifie l'utilisateur (1) du premier ordinateur (1001) au niveau de l'au moins un ordinateur de confiance (1004, 1005) et/ou possèdent une partie supplémentaire comprenant un certificat d'un service pour l'utilisateur (1).

12. Ordinateur selon la revendication 11 ou 12, dans lequel le composant processeur est en outre configuré pour :
dériver une première part secrète (511) de la valeur de nonce (510) sur base de la première part secrète (311) de la clé (400) et de la part secrète correspondante (501) de la valeur de nonce chiffrée (500) ; et
envoyer la première part secrète (511) de la valeur de nonce (510) à l'au moins un ordinateur de confiance (1004, 1005) en vue de la combiner avec des parts secrètes supplémentaires (514, 515) de la valeur de nonce (510) pour calculer la valeur de nonce (510).

13. Système informatisé (1000) pour sécuriser un accès par code NIP d'un premier ordinateur (1001) à un second ordinateur (1002) comprenant :
le premier ordinateur (1001), le second ordinateur (1002), un moyen de communication (1003) et au moins un ordinateur de confiance (1004, 1005), dans lequel le premier ordinateur (1001), le second ordinateur (1002), et l'au moins un ordinateur de confiance (1004, 1005) sont couplés par communications et le moyen de communication (1003) est couplé par communications à l'au moins un ordinateur de confiance (1004, 1005) ;
le premier ordinateur (1001) étant configuré pour :
demander l'accès au second ordinateur (1002) en utilisant une première part secrète (311) d'une clé (400) dérivée d'un NIP (300), dans lequel la première part secrète (311) de la clé (400) est associée à au moins une part secrète correspondante (341, 351) stockée sur l'au moins un ordinateur de confiance (1003, 1004) ;
envoyer des informations d'identifiant (ID1, ID1a) à au moins un ordinateur de confiance (1005, 1004), dans lequel les informations d'identifiant (ID1, ID1a) possèdent une partie pour identifier un utilisateur (1) du premier ordinateur (1001) à l'au moins un ordinateur de confiance (1005, 1004) ;
générer pour une valeur de nonce chiffrée (500) provenant du second ordinateur (1002) un ensemble de parts secrètes (501, 503, 504) pour le premier ordinateur (1001) et pour l'au moins un ordinateur de confiance (1003, 1004) en utilisant l'algorithme de partage de secret ; et
participer à un calcul partagé sécurisé de la valeur de nonce (510), dans lequel le calcul partagé sécurisé est basé sur des paires correspondantes ((311,501), (341,504), (351,505)) des parts secrètes (311, 341, 351) de la clé (400) et des parts secrètes (501, 504, 505) de la valeur de nonce chiffrée (500) ; et
le second ordinateur (1002) étant configuré pour :
générer la valeur de nonce (510) et pour chiffrer la valeur de nonce (510) avec la clé (400) ce qui donne la valeur de nonce chiffrée (500) ; et
accepter la demande d'accès du premier ordinateur (1001) dans le cas où le résultat du calcul partagé sécurisé correspond à la valeur de nonce initiale (510) ;
l'au moins un ordinateur de confiance (1005, 1004) étant configuré pour :
générer un identifiant d'association (390) en réponse aux informations d'identifiant (ID1, ID1a) et fournir l'identifiant d'association (390) au moyen de communication (1003), dans lequel l'identifiant d'association (390) est associé aux parts secrètes correspondantes de la clé (400) au niveau de l'au moins un ordinateur de confiance (1004, 1005) ; et participer au calcul sécurisé de la valeur de nonce (510), tout en masquant la valeur de nonce (510) au premier ordinateur (1001) ; et
le moyen de communication (1003) étant configuré pour :
recevoir l'identifiant d'association (390) en provenance de l'au moins un ordinateur de confiance (1005, 1004) et fournir l'identifiant d'association (390) à l'utilisateur (1).

14. Système selon la revendication 13, dans lequel l'au moins un ordinateur de confiance (1005, 1004) est en outre configuré pour supprimer chaque part secrète de la clé (400) après participation au calcul partagé sécurisé respectif.

15. Système selon la revendication 13 ou 14, dans lequel le moyen de communication (1003) est en outre configuré pour recevoir un certificat d'un service en provenance de l'au moins un ordinateur de confiance (1004, 1005) pour envoi à l'utilisateur (1), dans lequel le certificat est constitué d'une partie supplémentaire des informations d'identifiant (ID1, ID1a).
